# EUROPÄISCHE PATENTANMELDUNG

(11) **EP 3 563 953 A1**
(43) Veröffentlichungstag der Anmeldung: **06.11.2019**
(21) Anmeldenummer: 19175958.8
(22) Anmeldetag: 07.11.2013
(51) Int. Cl.: B23B 29/20

(54) **AUSRICHTVORRICHTUNG, AUSRICHTELEMENT FÜR EINE SOLCHE AUSRICHTVORRICHTUNG UND AUSRICHTVERFAHREN**

(30) Priorität: 24.12.2012 DE 102012025399
(62) Teilanmeldung aus: 13792257.1
(71) Anmelder: Sauter Feinmechanik GmbH, 72555 Metzingen (DE)
(72) Erfinder: Beck, Matthias, 72555 Metzingen (DE)
(74) Vertreter: Bartels und Partner, Patentanwälte

(57) **Zusammenfassung**

1. Ausrichtvorrichtung, Ausrichtelement für eine solche Ausrichtvorrichtung und Ausrichtverfahren
2. Eine Ausrichtvorrichtung zur lagegenauen Positionierung eines ersten Funktionselements (103), insbesondere eines Halters, an einem zweiten Funktionselement (105), insbesondere einer Scheibe, die aneinander lösbar festgelegt sind, wobei im festgelegten Zustand (FZ) (a) mindestens ein Ausrichtelement (115) in einer Gehäusevertiefung (117) des ersten Funktionselements (103) oder des zweiten Funktionselements (105) mittels mindestens eines Befestigungselementes (131) festgelegt angeordnet ist; (b) das Ausrichtelement (115) mit mindestens einer Befestigungsfläche (119) mit dem ersten Funktionselement (103) verbunden ist und mit mindestens einer Anlagefläche (121) in Anlage mit einer Abstützfläche (123) des zweiten Funktionselements (105) ist; (c) zwischen der Anlagefläche (121) und der Abstützfläche (123) eine Vorspanneinrichtung (125) wirkt, die eine in eine Ausgangsstellung rückstellende Kraft auf die aufeinander zu gestellte Anlagefläche (121) und Abstützfläche (123) ausübt; und (d) das Ausrichtelement (115) in der Gehäusevertiefung (117), seitlich versenkt angeordnet ist, wobei die Anlageflächen (121) über die Unterseite (133) des ersten Funktionselements (103) vorstehen, ist dadurch gekennzeichnet, dass im festgelegten Zustand (FZ) das jeweilige Befestigungselement (131) für das Durchführen von Festlege- und/oder Justiervorgängen von außen her zugänglich angeordnet ist und dass die Anlagefläche (121) an einem vorstehenden Körperteil (169) in Form eines klötzchenförmigen Eingriffsteils des Ausrichtelementes (115) vorgesehen ist.

Die Erfindung betrifft ferner ein Ausrichtelement für eine solche Ausrichtvorrichtung und ein Ausrichtverfahren.

## Beschreibung

Die Erfindung betrifft eine Ausrichtvorrichtung zur lagegenauen Positionierung eines ersten Funktionselements, insbesondere eines Halters, an einem zweiten Funktionselement, insbesondere einer Scheibe, die aneinander lösbar festgelegt sind, wobei im festgelegten Zustand (a) mindestens ein Ausrichtelement in einer Gehäusevertiefung des ersten Funktionselements oder des zweiten Funktionselements zumindest teilweise von außen zugänglich mittels mindestens eines Befestigungselementes festgelegt angeordnet ist; (b) das Ausrichtelement mit mindestens einer Befestigungsfläche mit dem ersten Funktionselement verbunden ist und mit mindestens einer Anlagefläche in Anlage mit einer Abstützfläche des zweiten Funktionselements ist; (c) zwischen der Anlagefläche und der Abstützfläche eine Vorspanneinrichtung wirkt, die eine in eine Ausgangsstellung rückstellende Kraft auf die aufeinander zu gestellte Anlagefläche und Abstützfläche ausübt; und (d) das Ausrichtelement in der Gehäusevertiefung seitlich versenkt angeordnet ist, wobei die Anlageflächen über die Unterseite des ersten Funktionselements vorstehen. Die Erfindung betrifft weiterhin ein Ausrichtelement für eine solche Ausrichtvorrichtung. Schließlich betrifft die Erfindung ein Ausrichtverfahren, insbesondere für das nachträgliche Anbringen mindestens eines Ausrichtelements an einer Funktionseinheit bestehend aus einem ersten Funktionselement und einem zweiten Funktionselement.

Dahingehende Scheiben werden als Werkzeugscheiben bezeichnet und in der industriellen Fertigung bei der spanenden Bearbeitung mit Werkzeugmaschinen eingesetzt. Sind mehrere Werkzeughalter mit zugehörigen Werkzeugen (beispielsweise feststehenden Drehmeißeln oder antreibbaren spanenden Werkzeugen) über den Umfang der Werkzeugscheibe angebracht, so erlaubt eine solche Anordnung durch Drehen der Scheibe einen sehr schnellen Wechsel der für die jeweilige Bearbeitung erforderlichen Werkzeuge. Da bei der Bearbeitung von Werkstücken regelmäßig nur sehr geringe Fertigungstoleranzen zugelassen sind, ist für einen sinnvollen Einsatz derartiger Werkzeugrevolver eine wiederholbar definierte Positionierung der Werkzeughalter und damit der Werkzeuge bezüglich der Werkzeugscheibe unerlässlich.

Aus der WO 2007/031145 A1 der Anmelderin ist ein Werkzeugrevolver, insbesondere für Werkzeugmaschinen bekannt, mit einer um eine Revolverachse drehbaren Werkzeugscheibe, die eine Mehrzahl von entlang ihres Umfangs verteilten Werkzeugstationen aufweist, die durch Drehen der Werkzeugscheibe jeweils in zumindest eine Arbeitsposition einstellbar sind, wobei an zumindest einem Teil der Werkzeugstationen eine Aufnahme für einen Werkzeughalter vorhanden ist und jeweils eine Befestigungseinrichtung vorgesehen ist, um den Werkzeughalter an einer betreffenden Aufnahme in definierter Positionierung festzulegen. Dadurch, dass bei der bekannten Lösung zur Positionierung als Ausrichtmittel zumindest ein aus der Aufnahme vorstehender, senkrecht zu dieser elastisch nachgiebiger Passkörper, sowie in einer Grundfläche des Werkzeughalters vertiefte Passflächen zur Zusammenwirkung mit dem zumindest einen Passkörper vorgesehen sind, ist bei der bekannten Lösung erreicht, dass bei Befestigen des Werkzeughalters an der Werkzeugstation der Befestigungseinrichtung die gewünschte Einstellposition eingenommen wird.

Ausgehend von diesem Stand der Technik liegt der Erfindung die Aufgabe zugrunde, eine Ausrichtvorrichtung, ein Ausrichtelement für eine solche Ausrichtvorrichtung und ein Ausrichtverfahren aufzuzeigen, durch welche eine lagegenaue Positionierung eines ersten Funktionselementes gegenüber einem zweiten Funktionselement noch einfacher, kostengünstiger und präziser möglich ist.

Der erste Teil der Aufgabe wird durch eine Ausrichtvorrichtung gemäß Anspruch 1 gelöst. Ein erfindungsgemäßes Ausrichtelement geht aus Anspruch 3 hervor. Die Lösung des verfahrensmäßigen Teils besteht in einem Ausrichtverfahren mit den Merkmalen von Anspruch 11. Vorteilhafte Ausführungsformen und Weiterbildungen der Erfindung gehen aus den Unteransprüchen hervor.

Erfindungsgemäß ist vorgesehen, dass im festgelegten Zustand das jeweilige Befestigungselement für das Durchführen von Festlege- und/oder Justiervorgängen von außen her zugänglich angeordnet ist und dass die Anlagefläche an einem vorstehenden Körperteil in Form eines klötzchenförmigen Eingriffsteils des Ausrichtelementes vorgesehen ist.

Durch die Anordnung des Ausrichtelements in der von außen zugänglichen Gehäusevertiefung wird zum einen eine besonders bauraumsparende Ausführungsform aufgezeigt und zum anderen ist eine vereinfachte, einfach nachzukontrollierende Montagemöglichkeit geschaffen, mit der später - auch nach längerer Einsatzdauer - noch die Möglichkeit der Nachjustierung eröffnet ist, ohne dass, wie im Stand der Technik bisher aufgezeigt, eine vollständige Demontage der Ausrichtvorrichtung notwendig wäre. Zudem kann die Gehäusevertiefung zur Ausrichtung des Ausrichtelements gegenüber einem der Funktionselemente genutzt werden. Dadurch, dass das Ausrichtelement eine Vorspanneinrichtung aufweist, kann zum Herstellen einer genauen Positionierung das erste Funktionselement gegenüber dem zweiten Funktionselement zunächst grob ausgerichtet werden. Beim Festlegen der Funktionselemente zueinander erfolgt dann aufgrund der Wirkung der Vorspanneinrichtung die genaue Ausrichtung. Auf diese Weise kommt es zu einer wesentlich genaueren Positionierung, ohne dass hochpräzise Messwerkzeuge zur Ausmessung der genauen Position der Funktionselemente zueinander zwingend erforderlich wären.

Die Ausrichtvorrichtung funktioniert beispielsweise mit drei oder vier Ausrichtelementen bei hoher Wiederholgenauigkeit in X-, Y- und Z-Richtung. Die hohe Wiederholgenauigkeit wird durch die Ausnutzung der Vorspannung der Ausrichtelemente bei der Montage erreicht. Mithin "lebt" das System von seinen durch die Vorspanneinrichtung angefederten Anlageflächen der Ausrichtelemente und ist dadurch in keiner der Festlegeachsen überbestimmt.

Ein weiterer Vorteil ist, dass die Ausrichtelemente separat herstellbar sind und anschließend an einem der Funktionselemente befestigt werden. Damit sind sie in großen Stückzahlen kostengünstig herstellbar und bei Bedarf austauschbar.

Weiterhin ist die Ausrichtvorrichtung mit den Systemen verschiedener Hersteller kompatibel und unabhängig von der jeweiligen übrigen Form der Schnittstelle zwischen dem ersten Funktionselement und dem zweiten Funktionselement.

Besonders vorteilhaft ist das Ausrichtelement in der Gehäusevertiefung seitlich versenkt angeordnet, wobei die Anlageflächen über die Unterseite des ersten Funktionselements hervorstehen. Mithin ist das Ausrichtelement in einer geschützten Lage aufgenommen. Zusätzlich kann eine Abdeckung für das Ausrichtelement vorgesehen sein. Durch die teilweise Versenkung in der Gehäusevertiefung kann zusätzlich Bauraum eingespart werden. Auf diese Weise können auf einem gegebenen Umfang mehr erste Funktionselemente an einem zweiten Funktionselement angeordnet werden.

Vorteilhaft sind am ersten Funktionselement mehrere, insbesondere drei oder vier, Ausrichtelemente um eine Hauptachse, wie der Hochachse, des ersten Funktionselements versetzt angeordnet. Durch diese spezielle Anordnung wird eine Ausrichtung des ersten Funktionselements gegenüber dem zweiten Funktionselement in mehrere Richtungen möglich. Damit wird die Ausrichtung des ersten Funktionselements präziser.

Es ist weiterhin ein Ausrichtelement für eine solche Ausrichtvorrichtung vorgesehen. Zur Ausbildung der Vorspanneinrichtung kann ein Schlitz im Ausrichtelement vorgesehen sein. Aufgrund des Schlitzes ist ein Ausrichtteil des Ausrichtelements gegenüber einem Befestigungsteil des Ausrichtelements elastisch rückstellbar. Somit können das erste und das zweite Funktionselement mit einer elastischen Vorspannkraft zueinander ausgerichtet werden. Diese elastische Vorspannkraft bleibt auch während des eingespannten Zustandes bestehen und gewährleistet während des Betriebes die genaue Ausrichtung der Funktionselemente zueinander.

Die Anlagefläche ist an einem vorstehenden Körperteil, einem klötzchenförmigen Eingriffsteil, des Ausrichtelements vorgesehen. Der Körperteil ist bevorzugt versetzt zu der Befestigungsfläche vorgesehen. Dies ermöglicht es, das Körperteil und die daran vorgesehene Anlagefläche radial nach au-ßen versetzt in Bezug auf das erste Funktionselement anzuordnen. Auf diese Weise kann eine größere Vorspannkraft auf die Abstützfläche des zweiten Funktionselements ausgeübt werden.

Besonders vorteilhaft weist das Körperteil auf zwei gegenüberliegenden Seiten Anlageflächen auf. Mithin ist eine Ausrichtung des ersten Funktionselements in zwei entgegengesetzte Richtungen möglich.

Darüber hinaus kann das Ausrichtelement auch zwei voneinander beabstandet angeordnete Körperteile mit daran vorgesehenen Anlageflächen aufweisen. Auf diese Weise ist es beispielsweise möglich, ein Gegenstück des zweiten Funktionselements mit seinen Abstützflächen zwischen den Körperteilen aufzunehmen, die dann an den Anlageflächen zur Anlage gebracht werden können.

Vorzugsweise ist die Anlagefläche gegenüber einer Hauptachse des ersten Funktionselementes geneigt, insbesondere um einen Winkel von maximal 5°, bevorzugt maximal 2°, schräg ausgerichtet. Die geringe Neigung erleichtert es, das erste Funktionselement gegenüber dem zweiten Funktionselement zu positionieren und diese Positionierung mit einer sehr hohen Präzision durchzuführen.

Das Ausrichtelement kann mit zwei Befestigungselementen, insbesondere mit Schraubbolzen, am Funktionselement befestigt sein, wobei vorzugsweise am Ausrichtteil Aussparungen für die Befestigungselemente vorgesehen sind. Durch die Verwendung von zwei Befestigungselementen kann das Ausrichtelement leichter gegenüber dem ersten Funktionselement ausgerichtet werden. Zudem ist die Befestigung aufgrund der redundanten Befestigungselemente im Betrieb sicherer.

Die Erfindung betrifft ferner ein Ausrichtverfahren, insbesondere für das nachträgliche Anbringen mindestens eines Ausrichtelements an einer Funktionseinheit, bestehend aus einem ersten Funktionselement und einem zweiten Funktionselement, wobei
- in einem ersten Schritt die beiden Funktionselemente ebenso wie zumindest ein Ausrichtelement mit einem reduzierten Anzugsmoment aneinander festgelegt werden;
- in einem zweiten Schritt mittels einer Einstell- und/oder Messeinrichtung, wie einem Lasermessgerät, einem Taster oder einer Ausrichtschablone, die beiden Funktionselemente zueinander ausgerichtet werden;
- in einem dritten Schritt bei vollem Anzugsmoment die Funktionselemente aneinander festgelegt werden; und
- in einem vierten Schritt das Ausrichtelement mit vollem Anzugsmoment an dem jeweiligen Funktionselement festgelegt wird.

In einer vorteilhaften Weiterbildung des Ausrichtverfahrens wird bei Verwendung einer einfach gestaltbaren Ausrichtschablone zusätzlich die Funktionseinheit zu den vorstehenden Schritten
- in einem fünften Schritt demontiert;
- in einem sechsten Schritt die Ausrichtschablone entfernt, wobei das jeweilige Ausrichtelement festverbunden mit dem ihm zuordenbaren Funktionselement bleibt; und
- in einem letzten Schritt die Funktionselemente durch Zusammenbau wieder miteinander zu einer Funktionseinheit für einen bestimmungsgemäßen Gebrauch verbunden werden.

Die Erfindung ist nachfolgend anhand von in den Figuren dargestellten Ausführungsbeispielen näher erläutert. Es zeigen:
- Fig. 1 bis 4: die erfindungsgemäße Ausrichtvorrichtung gemäß einer ersten Ausführungsform in einer perspektivischen Ansicht, zwei um 90° zueinander versetzt angeordneten Seitenansichten und in einer Ansicht von unten;
- Fig. 5 bis 7: ein Ausrichtelement der Ausrichtvorrichtung gemäß den Fig. 1 bis 4 in zwei rechtwinklig zueinander angeordneten Seitenansichten und in einer perspektivischen Ansicht;
- Fig. 8 bis 11: eine zweite Ausführungsform der Ausrichtvorrichtung in einer perspektivischen Ansicht, zwei rechtwinklig zueinander angeordneten Seitenansichten und in einer Ansicht von unten; und
- Fig. 12 bis 14: ein Ausrichtelement der Ausrichtvorrichtung gemäß den Fig. 8 bis 11 in zwei rechtwinklig zueinander angeordneten Seitenansichten und in einer perspektivischen Ansicht.

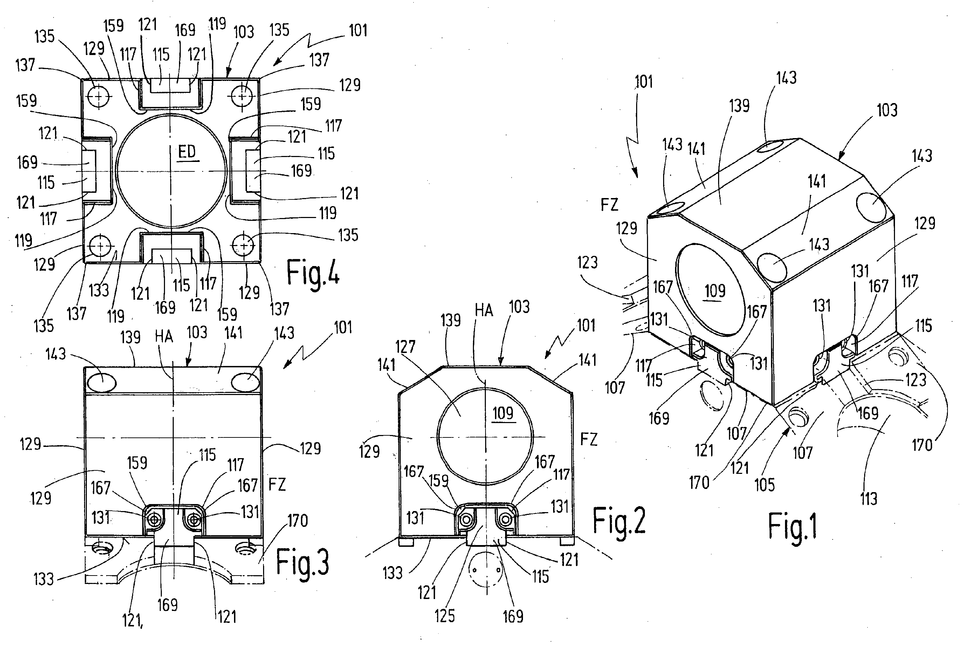

In den Fig. 1 bis 4 ist eine erfindungsgemäße Ausrichtvorrichtung 101 gemäß einer ersten Ausführungsform zur lagegenauen Positionierung eines ersten, hier kubisch ausgebildeten Funktionselements 103, insbesondere eines Halters für ein Werkzeug, an einem zweiten Funktionselement 105, insbesondere in Form einer nur in einem kleinen Segmentausschnitt gezeigten Scheibe gezeigt, welche aneinander lösbar festgelegt sind. Die Werkzeugscheibe 105, die mit einer nicht näher dargestellten Werkzeugmaschine in üblicher Weise koppelbar ist, weist dabei mehrere auf einem Außenumfang gleichmäßig verteilte und um einen Winkel versetzt angeordnete Positionen 107 für jeweils ein erstes Funktionselement 103 auf. Durch Drehen des zweiten Funktionselements 105 kann das erste Funktionselement 103 und das daran befindliche Werkzeug 109 entsprechend positioniert werden, beispielsweise um ein Werkstück (nicht dargestellt) spanend zu bearbeiten. Im zweiten Funktionselement 105 sind dazu Spannaufnahmen vorgesehen.

An jeder Position 107 der Werkzeugscheibe 105 befindet sich eine zentrale Öffnung 113, in die ein Eingriffsdorn ED eines ersten Funktionselementes 103 eingesetzt und dort festgelegt werden kann. Der Eingriffsdorn ED weist hierzu in bekannter und daher nicht mehr näher dargestellter Weise außenumfangsseitig an einer Stufenfläche eine Verzahnung auf, in die ein Niederhalter der Werkzeugscheibe 105 eingreift, wobei der Werkzeughalter 103 dann an die rechteckförmige Auflagefläche der Werkzeugscheibe 105 gezogen wird. Trotz dieser Festlegung von Werkzeughalter 103 an Werkzeugscheibe 105 genügt diese Festlegung nicht für eine lagegenaue Positionierung 103 gegenüber der Werkzeugscheibe 105 für die später angestrebte Bearbeitung von Werkstücken (nicht dargestellt) mittels der Werkzeugmaschine. Anstelle dieser Festlegemöglichkeit kann auch eine Verrastung über eine sonstige übliche Einkuppellösung erfolgen.

Der Werkzeughalter 103 weist gemäß der Darstellung nach der Fig. 1 eine Werkzeugaufnahme 109 auf, die im vorliegenden Fall für die Aufnahme eines spanenden Werkzeuges beispielsweise in Form eines Drehmeißels (nicht dargestellt) vorgesehen ist. Anstelle eines ortsfest aufgenommenen Dreh- oder Spanmeißels können bei entsprechend anderer Ausgestaltung des Werkzeughalters 103 auch drehbare Spanwerkzeuge mit aufgenommen werden, beispielsweise in Form eines Fräsers oder eines Schleiftellers. Auch bei einer dahingehenden Ausgestaltung des Werkzeughalters 103 kann die im Folgenden noch näher beschriebene Vorrichtung nebst Ausrichtelementen zum Einsatz kommen. Ferner ist dem Durchschnittsfachmann auf dem Gebiet von Werkzeugrevolvern eingängig, dass natürlich verschiedene Arten von Werkzeughaltern als erstes Funktionselement 103 an dem Außenumfang der Werkzeugscheibe 105 in den entsprechenden Positionen 107 festlegbar sind, wobei nicht alle Positionen 107 besetzt sein müssen.

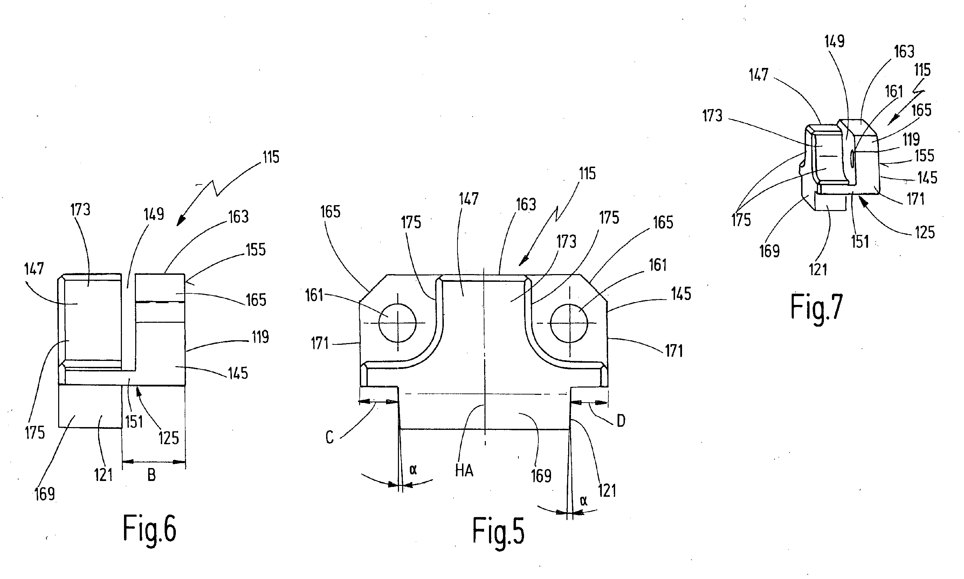

Im festgelegten Zustand FZ des ersten Funktionselements 103 am zweiten Funktionselement 105 gemäß der Darstellung nach der Fig. 1 ist mindestens ein Ausrichtelement 115 in einer Gehäusevertiefung 117 des ersten Funktionselements 103 zumindest teilweise von außen zugänglich angeordnet. Das Ausrichtelement 115 ist mit mindestens einer Befestigungsfläche 119 (Fig. 4, 7) mit dem ersten Funktionselement 103 verbunden und mit mindestens einer Anlagefläche 121 in Anlage mit einer Abstützfläche 123 des zweiten Funktionselements 105. Zwischen der Anlagefläche 121 und der Abstützfläche 123 (Fig. 1) wirkt eine Vorspanneinrichtung 125 (Fig. 6), die eine mit in eine Ausgangsstellung rückstellende Kraft auf die aufeinander zugestellte Anlagefläche 121 und Abstützfläche 123 ausübt.

In den Seitenflächen 129 des ersten Funktionselements 103 sind jeweils im unteren Teil mittig Vertiefungen 117 angeordnet, in denen Ausrichtelemente 115 befestigt sind. Die Ausrichtelemente 115 sind über zwei Schraubbolzen 131 in der Vertiefung 117 gehalten. Die Vertiefung 117 ist von außen seitlich zugänglich und darüber hinaus so ausgebildet, dass sich das zuordenbare Ausrichtelement 115 über die Unterseite 133 des ersten Funktionsteils 103 hinaus erstreckt. Insgesamt sind, wie man insbesondere in Fig. 4 sehen kann, auf der Unterseite 133 des ersten Funktionselements 103 vier Vertiefungen 117 vorgesehen, in denen jeweils ein Ausrichtelement 115 angeordnet ist. Die Ausrichtelemente 115 sind bezüglich einer Hauptachse HA, hier der Hochachse, des ersten Funktionselements 103 um jeweils 90° zueinander versetzt angeordnet. Neben den Ausrichtelementen 115 sind in üblicher Weise vorstehende Passstifte 135 in den Ecken 137 der Unterseite 133 des ersten Funktionselements 103 vorgesehen. Auf der Oberseite 139 ist das erste Funktionselement 103 mit zwei Abschrägungen 141 versehen, die Öffnungen 143 für die Montage der Passstifte 135 aufweisen.

Das Ausrichtelement 115 der Fig. 1 bis 4 ist in den Fig. 5 bis 7 im Detail dargestellt. Das Ausrichtelement 115 weist ein Befestigungsteil 145 und ein Ausrichtteil 147 auf. Die beiden Teile 145, 147 sind durch einen in Blickrichtung auf die Fig. 1 bis 3 und 4 bis 7 vertikal verlaufenden Schlitz 149 getrennt, sodass die beiden Teile 145, 147 lediglich durch einen verjüngten Brückenabschnitt 151 an ihren unteren Enden miteinander verbunden sind. Durch die geschlitzte Ausführung ist das Ausrichtelement 115 mit einer Vorspanneinrichtung 125 versehen. Der Schlitz 149 ist im festgelegten Zustand FZ parallel zur Hochachse HA des ersten Funktionselements 103 orientiert. Somit ist das Ausrichtteil 147 gegenüber dem Befestigungsteil 145 elastisch einstellbar, insbesondere rückstellbar. Das Befestigungsteil 145 weist auf der Rückseite 155 die Befestigungsfläche 119 auf, die dazu vorgesehen ist, in Anlage mit einer Rückwand 159 der jeweiligen Vertiefung 117 des ersten Funktionselements 103 gebracht zu werden. Ferner ist das Befestigungsteil 145 von zwei horizontal verlaufenden Bohrungen 161 durchsetzt, damit zwei Schraubbolzen 131 das Befestigungsteil 145 zur Festlegung am ersten Funktionselement 103 durchgreifen können. Auf der Oberseite 163 ist das Befestigungsteil 145 mit seitlichen Abschrägungen 165 versehen, die an die Ausrundungen 167 der jeweiligen Vertiefung 117 angepasst sind. Das Ausrichtteil 115 weist ein nach unten gerichtetes und damit über die Unterseite 133 des ersten Funktionselements 3 vorstehendes Körperteil 169 in Form eines klötzchenförmigen Eingriffsteils auf. Das Eingriffsteil 169 ist von der Befestigungsfläche 119 um den Abstand B beabstandet. An dem Eingriffsteil 169 sind seitlich auf zwei gegenüberliegenden Seiten Anlageflächen 121 ausgebildet. Die Anlageflächen 121 sind jeweils gegenüber der Hochachse HA des Ausrichtteils 115 um einen Winkel α von zirka 2° geneigt. Die Anlageflächen 121 sind des Weiteren gegenüber den seitlichen Außenflächen 171 des Ausrichtelements 115 nach innen um die Abstände C und D versetzt angeordnet.

Das Ausrichtteil 115 weist ein dem Körperteil 169 gegenüberliegendes Gegenstück 173 auf. In dem Gegenstück 173 sind seitlich zwei ausgerundete Aussparungen 175 in Form von Bohrungen für die Aufnahme der Schraubbolzen 131 vorgesehen, die in Gewindebohrungen (nicht dargestellt) des Werkzeughalters 103 eingreifen.

Die vorstehend beschriebene Ausrichtvorrichtung kann für ein besonders vorteilhaftes, erfindungsgemäßes Ausrichtverfahren verwendet werden. Da die beschriebenen Ausrichtelemente 115 von außen her, wie dies insbesondere die Darstellungen nach den Fig. 1 bis 3 zeigen, gegenüber bekannten Lösungen von außen her sehr gut zugänglich sind, lassen sich in besonders einfacher Weise die notwendigen Justiervorgänge vornehmen. Auch bei längerer Einsatzdauer des jeweiligen Werkzeughalters 103 an der Werkzeugscheibe 105 lassen sich im Bedarfsfall, also bei entsprechender Dejustage, erneut die notwendigen Justiervorgänge vornehmen, ohne dass der Halter 103 von der Werkzeugscheibe 105 abgenommen werden müsste, jedoch kann ein Lockern der dahingehenden Verbindung angezeigt sein. Sofern bestehende Werkzeugscheiben 105 mit Haltern 103 auf dem Markt und im Einsatz sind, die über keine oder eine anders geartete, schwer zugängliche oder schwer bedienbare Justiereinrichtung verfügen, kann man den Werkzeughalter 103 in einfacher Weise spanend dergestalt nachbearbeiten, dass man von außen her die jeweilige Rückwand 159 schafft, die dann die jeweils hergestellte Vertiefung 117 im Halter 103 nach innen hin begrenzt.

Bei dem Ausrichtverfahren werden in einem ersten Schritt die beiden Funktionselemente 103, 105 ebenso wie zumindest ein Ausrichtelement 115 mit einem reduzierten Anzugsmoment aneinander festgelegt, das heißt, der Eingriffsdorn ED ist ebenso wenig in der zentralen Öffnung 113 einer jeden Position 107 wie die beiden Schraubbolzen 131 eines jeden Ausrichtelementes 115 festgelegt. In einem sich anschließenden zweiten Schritt, werden vorzugsweise unter Einsatz einer Einstell- und/oder Messeinrichtung (nicht dargestellt), wie einem Lasermessgerät, einem Taster oder einer Ausrichtschablone, die beiden Funktionselemente von Hand zueinander ausgerichtet.

In einem dritten Schritt wird dann das volle Anzugsmoment auf den Eingriffsdorn ED ausgeübt und dergestalt die Funktionselemente 103, 105 in der vorher genau ausgerichteten Position aneinander festgelegt. Im vierten, sich anschließenden Schritt wird dann das Ausrichtelement 115 mit vollem Anzugsmoment über die Schraubbolzen 131 an dem Funktionselement 103 festgelegt. Aufgrund der elastisch nachgiebigen Ausgestaltung des Befestigungsteils 145 gegenüber dem Ausrichtteil 147 über den Brückenabschnitt 151 unter Bildung des vertikalen Schlitzes 149 wird die lagegenaue Orientierung des jeweiligen Ausrichtelementes 115 erreicht, weil sich das Ausrichtelement 115 mit seiner Rückseite 155 an der Rückwand 159 des festgelegten Halters 103 vollflächig abstützen kann ebenso wie sich das Ausrichtelement 115 über das Eingriffsteil 169 mit seinen beiden gegenüberliegenden Anlageflächen 121 an der zugeordneten Aufnahme 170 mit den beiden gegenüberliegenden Abstützflächen 123 abstützen kann. Etwaige Unregelmäßigkeiten oder Fluchtungsfehler lassen sich dann über die elastische Nachgiebigkeit des Ausrichtelementes 115, wie beschrieben, ausgleichen, wobei aufgrund der Metallausführung des Ausrichtelementes 115 eine entsprechende Rückstellkraft entsteht, die wiederum auf den Werkzeughalter 103 zurückwirkt und diesen positioniert.

Wenn in Abhängigkeit von der jeweiligen Bearbeitungsaufgabe eine Justierung des Werkzeughalters 103 gegenüber der Werkzeugscheibe 105 mit höherer Präzision benötigt wird, sind mehrere Ausrichtelemente 115 in unterschiedlichen Ausrichtachsen notwendig, wobei insgesamt vier Ausrichtelemente 115 auf vier gegenüberliegenden Seiten des Werkzeughalters 103 zum Einsatz kommen können.

Sofern in besonders einfacher Weise und mit geringem Kostenaufwand als Einstell- und/oder Messeinrichtung eine Ausrichtschablone (nicht dargestellt) zum Einsatz kommt, ist in einem fünften zusätzlichen Schritt die Funktionseinheit wieder zu demontieren; in einem sechsten Schritt die Ausrichtschablone entsprechend zu entfernen, wobei das jeweilige Ausrichtelement 115 mit dem im zuordenbaren Funktionselement 103, 105 fest verbunden bleibt; und in einem letzten Schritt die Funktionselemente 103, 105 durch Zusammenbau für einen bestimmungsgemäßen Gebrauch wieder miteinander verbunden werden.

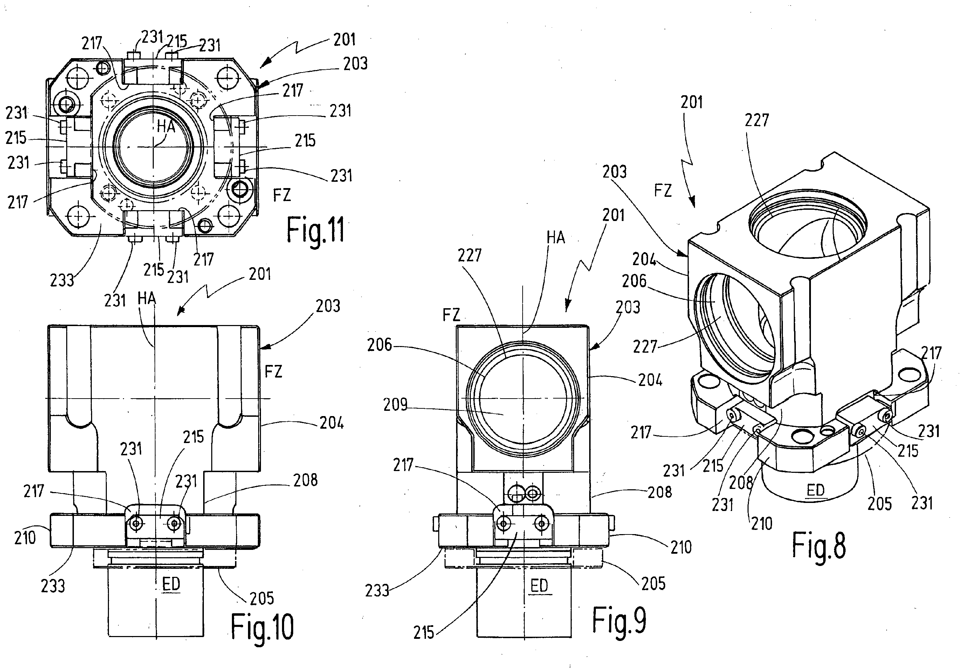

In den Figuren 8 bis 11 ist eine zweite Ausführungsform der Ausrichtvorrichtung 201 mit einem ersten Funktionselement 203 gezeigt. Dieses erste Funktionselement 203 weist ebenfalls in einem Oberteil 204 eine Halterung 206 für ein Werkzeug 209 auf. Dazu ist das Oberteil 204 mit diversen Öffnungen 227 versehen. In einem Unterteil 208 weist das erste Funktionselement 203 einen Flansch 210 bzw. umlaufenden Kragen auf. In dem Flansch 210 sind Ausrichtelemente 215 in Vertiefungen 217 versenkt angeordnet. Es sind wiederum vier Ausrichtelemente 215 auf der Unterseite 233 des ersten Funktionselements 203 vorgesehen, die um die Hochachse HA, die eine der Hauptachsen des ersten Funktionselements 203 ist, versetzt angeordnet sind. Damit sind die Ausrichtelemente 215 mittig auf gegenüberliegenden Seiten des Funktionselements 203 angeordnet. Die Ausrichtelemente 215 sind jeweils mit zwei Schraubbolzen 231 am ersten Funktionselement 203 befestigt. Darüber hinaus sind sie vollständig in dem Flansch 210 aufgenommen.

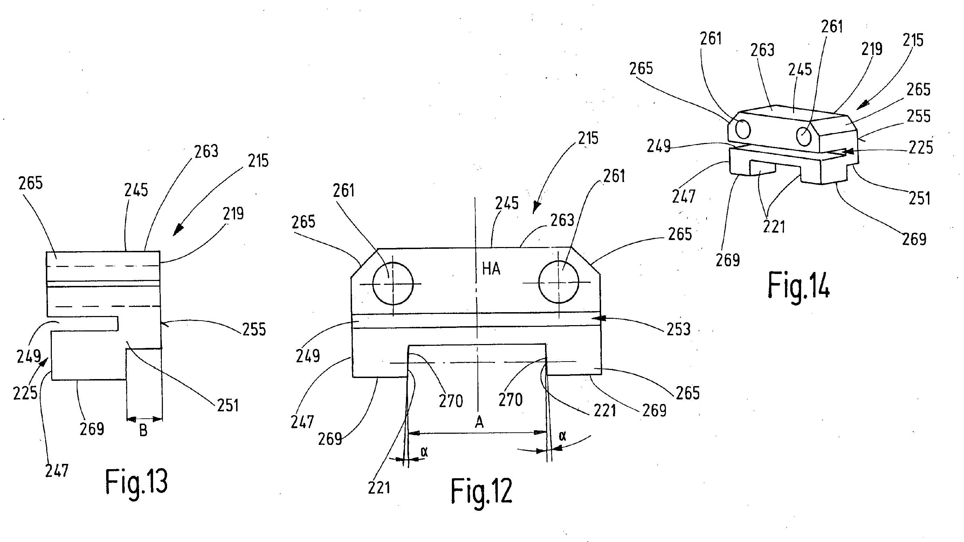

Das Ausrichtelement 215 ist im Detail in den Fig. 12 bis 14 dargestellt. Auch dieses Ausrichtteil 215 weist einen Schlitz 249 zwischen einem oberen Befestigungsteil 245 und einem unteren Ausrichtteil 247 auf. Der Schlitz 249 ist im festgelegten Zustand FZ des Ausrichtelements 215 parallel zur Unterseite 233 des ersten Funktionselements 203 ausgerichtet und weist nach innen. Durch den Schlitz 249 ist die Vorspanneinrichtung 225 im Ausrichtelement 215 ausgebildet, so dass das Befestigungsteil 245 gegenüber dem Ausrichtteil 247 elastisch rückstellbar ist. Das obere Befestigungsteil 245 ist ebenfalls von zwei parallelen Bohrungen 261 für Schraubbolzen 231 durchsetzt. Darüber hinaus sind auf der Oberseite 263 des Ausrichtelements 215 zwei Abschrägungen 265 vorgesehen. Auf der Rückseite 255 weist das Befestigungsteil 215 eine Befestigungsfläche 219 auf. Über einen Brückenabschnitt 251 geht das Befestigungsteil 245 in ein Ausrichtteil 247 über. Am Ausrichtteil 247 sind zwei Körperteile 269 in Form von klötzchenförmigen Eingriffsteilen ausgebildet. Die beiden Eingriffsteile 269 sind voneinander in einem Abstand A und nach unten vorstehend angeordnet. Die Eingriffsteile 269 sind von der Befestigungsfläche 219 um den Abstand B beabstandet. An den Innenseiten 270 weisen die Eingriffsteile 269 Anlageflächen 221 zur Aufnahme eines Gegenstücks auf, das mit zu den Anlageflächen 221 korrespondierenden Abstützflächen versehen ist. Die Anlageflächen 221 sind gegenüber einer Hochachse HA des ersten Funktionselements 203 um einen Winkel α von 2° geneigt bzw. schräg ausgerichtet. Im festgelegten Zustand FZ ist das Ausrichtteil 247 gegenüber dem Befestigungsteil 245 ausgelenkt und bewirkt so eine Vorspannung, die als rückstellende Kraft zur Ausrichtung der Funktionselemente 203, 205 wirkt.

Durch die erfindungsgemäßen Ausrichtvorrichtung 101, 201 sind die ersten Funktionselemente 103, 203 gegenüber den zweiten Funktionselementen 105, 205 besonders einfach und präzise bei einer hohen Wiederholgenauigkeit aufgrund der durch die Vorspanneinrichtung 125, 225 angefederten Anlageflächen 121, 221 positionierbar. Es sind keine zusätzlichen Hilfsmittel notwendig, um die Positionierungen auszuführen. Die Ausrichtelemente 115, 215 sind kostengünstig herstellbar und bei Bedarf nachrüstbar sowie bei Verschleiß austauschbar.

## Patentansprüche

1. Ausrichtvorrichtung zur lagegenauen Positionierung eines ersten Funktionselements (103; 203), insbesondere eines Halters, an einem zweiten Funktionselement (105; 205), insbesondere einer Scheibe, die aneinander lösbar festgelegt sind, wobei im festgelegten Zustand (FZ)
- mindestens ein Ausrichtelement (115; 215) in einer Gehäusevertiefung (117; 217) des ersten Funktionselements (103; 203) oder des zweiten Funktionselements (105; 205) mittels mindestens eines Befestigungselementes (131; 231) festgelegt angeordnet ist;
- das Ausrichtelement (115; 215) mit mindestens einer Befestigungsfläche (119; 219) mit dem ersten Funktionselement (103; 203) verbunden ist und mit mindestens einer Anlagefläche (121; 221) in Anlage mit einer Abstützfläche (123) des zweiten Funktionselements (105; 205) ist;
- zwischen der Anlagefläche (121; 221) und der Abstützfläche (123) eine Vorspanneinrichtung (125; 225) wirkt, die eine in eine Ausgangsstellung rückstellende Kraft auf die aufeinander zu gestellte Anlagefläche (121; 221) und Abstützfläche (123) ausübt; und
- das Ausrichtelement (115; 215) in der Gehäusevertiefung (117; 217), seitlich versenkt angeordnet ist, wobei die Anlageflächen (121; 221) über die Unterseite (133; 233) des ersten Funktionselements (103; 203) vorstehen,
**dadurch gekennzeichnet, dass** im festgelegten Zustand (FZ) das jeweilige Befestigungselement (131; 231) für das Durchführen von Festlege- und/oder Justiervorgängen von außen her zugänglich angeordnet ist und dass die Anlagefläche (121; 221) an einem vorstehenden Körperteil (169; 269) in Form eines klötzchenförmigen Eingriffsteils des Ausrichtelementes (115; 215) vorgesehen ist.

2. Ausrichtvorrichtung nach Anspruch 1, **dadurch gekennzeichnet, dass** am ersten Funktionselement (103; 203) mehrere Ausrichtelemente (115; 215) um eine Hauptachse (HA) des ersten Funktionselements (103; 203) versetzt angeordnet sind.

3. Ausrichtelement für eine Ausrichtvorrichtung gemäß einem der vorgehenden Ansprüche, **dadurch gekennzeichnet, dass** die Anlagefläche (121; 221) an einem vorstehenden Körperteil (169; 269), einem klötzchenförmigen Eingriffsteil, des Ausrichtelements (115; 215) vorgesehen ist.

4. Ausrichtelement nach Anspruch 3, **dadurch gekennzeichnet, dass** zur Ausbildung der Vorspanneinrichtung (125; 225) ein Schlitz (149; 249) im Ausrichtelement (115; 215) vorgesehen ist.

5. Ausrichtelement nach Anspruch 4, **dadurch gekennzeichnet, dass** aufgrund des Schlitzes (149; 249) ein Ausrichtteil (147; 247) des Ausrichtelements (115; 215) gegenüber einem Befestigungsteil (145; 245) des Ausrichtelements (115; 215) elastisch rückstellbar ist.

6. Ausrichtelement nach einem der Ansprüche 3 bis 5, **dadurch gekennzeichnet, dass** das Körperteil (169; 269) versetzt zu der Befestigungsfläche (119; 219) vorgesehen ist.

7. Ausrichtelement nach einem der Ansprüche 3 bis 6, **dadurch gekennzeichnet, dass** das Körperteil (169) auf zwei gegenüberliegenden Seiten Anlageflächen (121) aufweist.

8. Ausrichtelement nach einem der Ansprüche 3 bis 7, **dadurch gekennzeichnet, dass** das Ausrichtelement (115; 215) zwei voneinander beabstandet angeordnete Körperteile (269) mit daran vorgesehenen Anlageflächen (221) aufweist.

9. Ausrichtelement nach einem der Ansprüche 3 bis 8, **dadurch gekennzeichnet, dass** die Anlagefläche (121; 221) gegenüber einer Hauptachse (HA) des ersten Funktionselements (103; 203) geneigt ist, insbesondere um einen Winkel (α) von maximal 5°, bevorzugt maximal 2°, schräg ausgerichtet ist.

10. Ausrichtelement nach einem der Ansprüche 3 bis 9, **dadurch gekennzeichnet, dass** das Ausrichtelement (115; 215) mit zwei Befestigungselementen (131; 231), insbesondere Schraubbolzen, am ersten Funktionselement (103; 203) befestigt ist, wobei vorzugsweise am Ausrichtteil (147) Aussparungen (175) für die Befestigungselemente (131) vorgesehen sind.

11. Ausrichtverfahren, insbesondere für das nachträgliche Anbringen mindestens eines Ausrichtelements (115; 215) an einer Funktionseinheit, bestehend aus einem ersten Funktionselement (103; 203) und einem zweiten Funktionselement (105; 205), wobei
- in einem ersten Schritt die beiden Funktionselemente (103, 105; 203, 205) ebenso wie zumindest ein Ausrichtelement (115; 215) mit einem reduzierten Anzugsmoment aneinander festgelegt werden;
- in einem zweiten Schritt mittels einer Einstell- und/oder Messeinrichtung, wie einem Lasermessgerät, einem Taster oder einer Ausrichtschablone, die beiden Funktionselemente (103, 105; 203, 205) zueinander ausgerichtet werden;
- in einem dritten Schritt bei vollem Anzugsmoment die Funktionselemente (103, 105; 203, 205) aneinander festgelegt werden; und
- in einem vierten Schritt das Ausrichtelement (115; 215) mit vollem Anzugsmoment an dem jeweiligen Funktionselement (103, 105; 203, 205) festgelegt wird.

12. Ausrichtverfahren nach dem Anspruch 11, **dadurch gekennzeichnet, dass** bei Verwendung einer Ausrichtschablone zusätzlich die Funktionseinheiten zu den vorstehenden Schritten
- in einem fünften Schritt demontiert wird;
- in einem sechsten Schritt die Ausrichtschablone entfernt wird, wobei das jeweilige Ausrichtelement (115; 215) mit dem ihm zuordenbaren Funktionselementen (103, 105; 203, 205) fest verbunden bleibt; und
- in einem letzten Schritt die Funktionselemente (103, 105; 203, 205) durch Zusammenbau für einen bestimmungsgemäßen Gebrauch wieder miteinander verbunden werden.
